# EUROPÄISCHE PATENTSCHRIFT

(11) **EP 2 507 537 B1**
(45) Veröffentlichungstag und Bekanntmachung des Hinweises auf die Patenterteilung: **26.08.2015**
(21) Anmeldenummer: 10803354.9
(22) Anmeldetag: 02.12.2010
(51) Int. Cl.: F16J 1/16

(54) **BOLZENNABEN EINES KOLBENS FÜR EINEN VERBRENNUNGSMOTOR**
PIN BOSSES OF A PISTON FOR AN INTERNAL COMBUSTION ENGINE
BOSSAGE D'AXE D'UN PISTON POUR UN MOTEUR À COMBUSTION INTERNE

(30) Priorität: 03.12.2009 DE 102009056920
(43) Veröffentlichungstag der Anmeldung: 10.10.2012
(73) Patentinhaber: MAHLE International GmbH, 70376 Stuttgart (DE)
(72) Erfinder: BÖKLE, Harald, 71696 Möglingen (DE); SCHNAITMANN, Gottfried, 71522 Backnang (DE); FISCHER, Rainer, 70176 Stuttgart (DE); BRAIG, Ralf, 73614 Schorndorf (DE); MÜLLER, Helmut, 70599 Stuttgart (DE)
(74) Vertreter: BRP Renaud & Partner mbB Rechtsanwälte Patentanwälte Steuerberater
(86) Internationale Anmeldenummer: PCT/DE2010/001398
(87) Internationale Veröffentlichungsnummer: WO 2011/066821

(56) Entgegenhaltungen:
- DE-A1- 3 036 062
- DE-A1-102006 015 586
- JP-A- 11 303 993
- US-A- 5 072 654

## Beschreibung

Die Erfindung betrifft Bolzennaben eines Kolbens für einen Verbrennungsmotor mit jeweils einer Bolzenbohrung zum Lagern eines Kolbenbolzens.

Aus der Offenlegungsschrift DE 10 2006 015 586 A1 sind Bolzennaben eines Kolbens für einen Verbrennungsmotor bekannt, die von radial innen nach radial außen durchgehend in Richtung der Kolbenachse längsoval ausgebildete Bolzenbohrungen aufweisen. Nachteilig ist hierbei, dass sich der in der Bolzenbohrung gelagerte Kolbenbolzen unter Gasdruckbelastung queroval verformt, sodass hierbei insbesondere der Zenitbereich der Bolzenbohrungen erhöhten Tangentialspannungen, das heißt, tangential zur Bohrungsinnenfläche liegenden Zugspannungen ausgesetzt ist, die eine Verringerung der Lebensdauer des Kolbens bewirken.

Aus der Deutschen Offenlegungsschrift 1 650 206 sind Bolzennaben eines Kolbens für einen Verbrennungsmotor bekannt, die in Bezug auf die Kolbenachse durchgehend queroval ausgebildete Bolzenbohrungen ausweisen. Dies hat den Nachteil, dass der Nadirbereich der Bolzenbohrungen unter Massenkraftbelastung bei höheren Motordrehzahlen erhöhten Tangentialspannungen ausgesetzt ist, die ebenfalls eine Verringerung der Lebensdauer des Kolbens bewirken.

JP 11 303 993 A offenbart einen Bolzennaben gemäß dem Oberbegriff des Anspruchs 1.

Aufgabe der vorliegenden Erfindung ist es demzufolge, die genannten Nachteile des Standes der Technik zu vermeiden und die Bolzenbohrungen der Bolzennaben eines Kolbens für einen Verbrennungsmotor dahingehend zu verbessern, dass der Kolben den im Motorbetrieb auftretenden Beanspruchungen standhält, indem die Tangentialspannungen in der Bolzenbohrung so weit wie möglich reduziert werden. Gelöst wird diese Aufgabe dadurch, dass die in Richtung der Bohrungsachse gesehen inneren Bereiche der Bolzenbohrungen beidseitig des Zenits Bereiche aufweisen, die von der Bohrungsachse einen größeren Abstand haben als der Zenit der Bolzenbohrung, dass im inneren Bereich der Bolzenbohrungen der Zenit der Bolzenbohrungen einen geringeren Abstand von der Bohrungsachse aufweist als der Nadir der Bolzenbohrungen, dass die in Richtung der Bohrungsachse gesehen

### BESTÄTIGUNGSKOPIE

äußeren Bereiche der Bolzenbohrungen in Bezug zur Kolbenachse queroval ausgebildet sind, und dass die inneren Bereiche der Bolzenbohrungen stetig in die äußeren Bereiche der Bolzenbohrungen übergehen.

Vorteilhafte Ausgestaltungen der Erfindung sind Gegenstand der Unteransprüche.

Einige Ausführungsbeispiele der Erfindung werden im Folgenden anhand der Zeichnungen beschrieben. Es zeigen
- Fig. 1: eine Bolzennabe für einen Verbrennungsmotor mit der efindungsgemäßen Bolzenbohrung im Schnitt,
- Fig. 2: einen Querschnitt durch die Bolzenbohrung entlang der Linie II-II in Fig. 1,
- Fig. 3: eine Ausgestaltung des Querschnitts durch die Bolzenbohrung entlang der Linie III-III in Fig. 1,
- Fig. 4: die Bolzenbohrung gemäß der Erfindung mit einem darin angeordneten, aufgrund mechanischer Belastungen verformten Kolbenbolzen und
- Fig. 5 und 6: weitere Ausgestaltungen der Bolzenbohrung entlang der Linie III-III in Fig. 1.

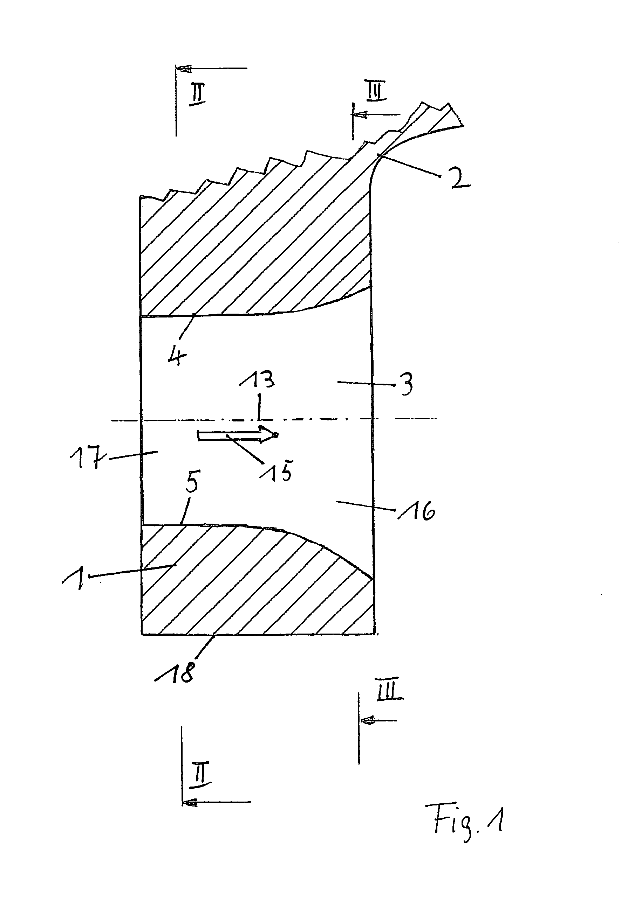

In Fig. 1 ist eine Bolzennabe 1 eines Kolbens 2 für einen Verbrennungsmotor im Schnitt entlang der Bohrungsachse 13 der Bolzenbohrung 3 dargestellt. Die Schnittebene ist in Fig. 1 so durch die Bolzennabe 1 gelegt, dass der Zenit 4 der Bolzenbohrung 3, das heißt, der dem unteren Ende 18 des Kolbens 2 abgewandte, obere Bereich der Bolzenbohrung 3, und der Nadir 5 der Bolzenbohrung 3, das heißt, der untere Bereich der Bolzenbohrung 3, zu sehen sind. Hierbei beschreibt der Zenit 4 von außen nach innen, das heißt, in Richtung des Pfeiles 15 eine nach oben gebogene Linie, während der Nadir 5 von außen nach innen eine nach unten gebogene Linie beschreibt, was heißt, dass der Durchmesser der Bolzenbohrung 3 zwischen Nadir 5 und Zenit 4 von außen nach innen zunimmt.

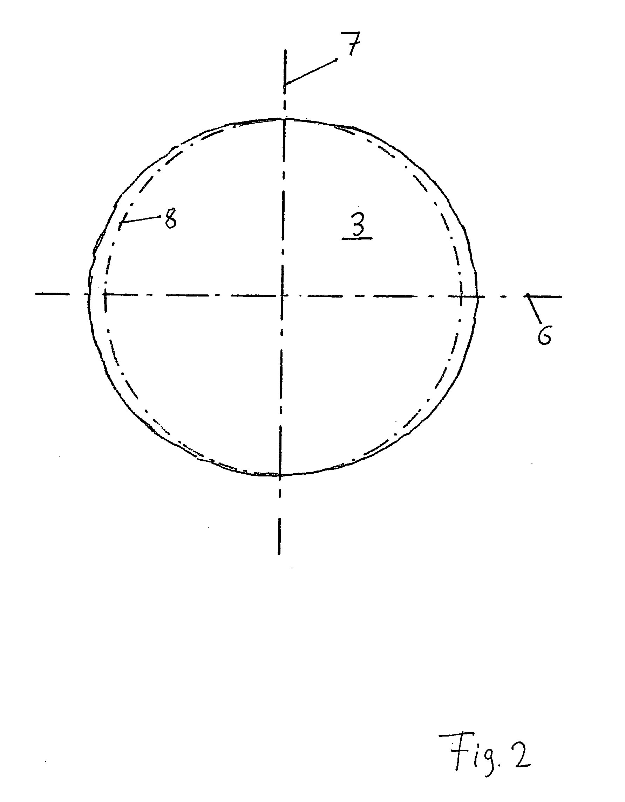

Der in Fig. 2 dargestellte Schnitt durch den äußeren Bereich 17 der Bolzenbohrung 3 entlang der Linie II-II in Fig. 1 zeigt, dass die Bolzenbohrung 3 außen queroval ausbildet ist, wobei die große Achse 6 der Ovalität senkrecht zur Kolbenachse 7 liegt.

Zur besseren Darstellung der Ovalität der Bolzenbohrung 3 ist in Fig. 2 eine erste, kreisrunde Hilfslinie 8 strichpunktiert eingezeichnet.

Alternativ hierzu kann der äußere Teil der Bolzenbohrung 3 im Bereich des Nadirs 5 in Richtung der Kolbenachse 7 längsoval oder auch kreisrund ausgebildet sein.

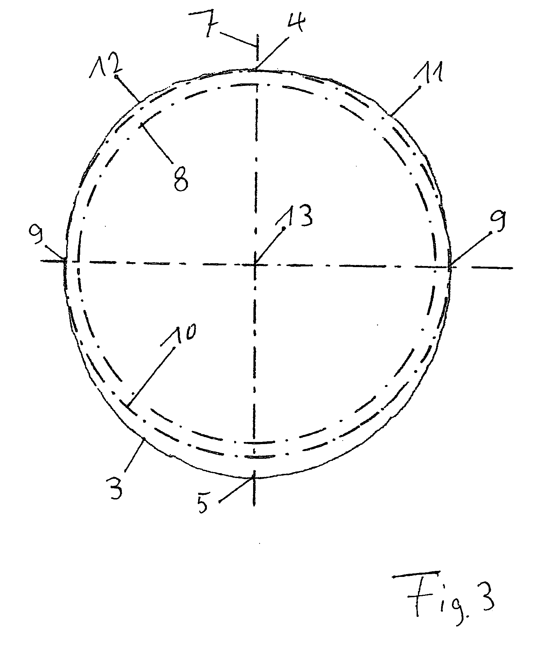

Fig. 3 zeigt einen Schnitt durch eine Ausgestaltung des inneren Bereichs 16 der Bolzenbohrung 3 entlang der Linie III-III in Fig. 1. Wie anhand der kreisrunden, zweiten Hilfslinie 10 aber auch anhand von Fig. 1 zu sehen ist, ist im inneren Bereich 16 der Abstand des Nadirs 5 der Bolzenbohrung 3 von der Bohrungsachse 13 größer als der Abstand des Zenits 4 der Bolzenbohrung 3 von der Bohrungsachse 13, sodass sich innen eine Asymmetrie der Bolzenbohrung 3 ergibt.

Weiterhin ist in Fig. 3 anhand der ersten Hilfslinie 8 gut erkennbar, dass der innere Bereich 16 der Bolzenbohrung 3, wie er in Fig. 3 dargestellt ist, einen größeren Durchmesser als der in Fig. 2 dargestellte, äußere Bereich 17 der Bolzenbohrung 3 hat.

Anhand der zweiten Hilfslinie 10 ist zudem gut zu erkennen, dass der Nadir 5 der in Fig. 3 dargestellten Ausgestaltung der Bolzenbohrung 3 längsoval gestaltet ist, wobei die große Achse der Ovalität parallel zur Kolbenachse 7 liegt, während die Bolzenbohrung 3 im Bereich des Zenits 4 im vorliegenden Ausführungsbeispiel eine querovale Form hat, wie die Bereiche 11 und 12 beidseitig des Zenitbereichs 4 der Bolzenbohrung 3 zeigen, die, wie anhand der zweiten Hilfslinie 10 gut zu sehen ist, jeweils einen größeren Abstand von der Bohrungsachse 13 aufweisen, als ihn die Bolzenbohrung 3 im Bereich des Zenits 4 und im Bereich des zwischen Zenit 4 und Nadir 5 liegenden Äquators 9 von der Bohrungsachse 13 hat.

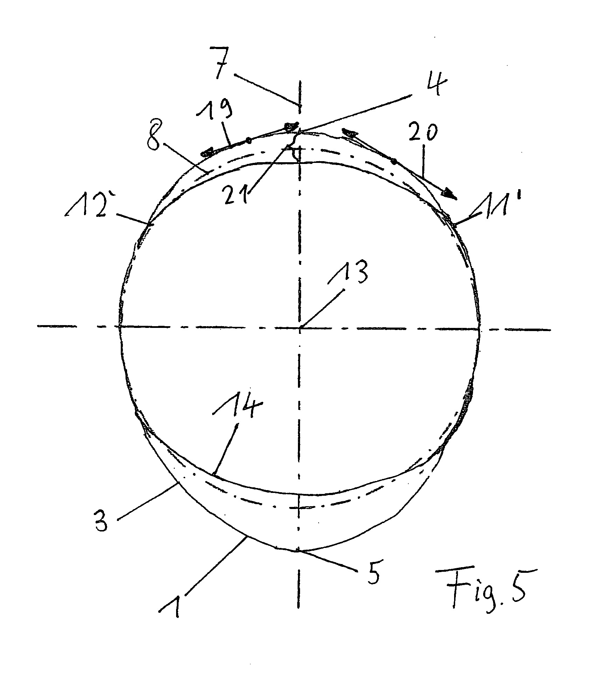

Alternativ hierzu kann der innere Bereich 16 der Bolzenbohrung 3 im Bereich des Zenits 4 ebenso wie im Bereich des Nadirs 5 in Richtung der Kolbenachse 7 längsoval ausgebildet sein, wie es in Fig. 5 dargestellt ist. Auch hierbei weist der Nadir 5 der Bolzenbohrung 3 einen größeren Abstand von der Bohrungsachse 13 auf als der Zenit 4 der Bolzenbohrung 3.

Weiterhin kann beim Ausführungsbeispiel gemäß Fig. 5 im inneren Bereich 16 der Bolzenbohrung 3 der Zenit 4 der Bolzenbohrung 3 einen kreisrunden Querschnitt aufweisen. (in den Figuren nicht dargestellt)

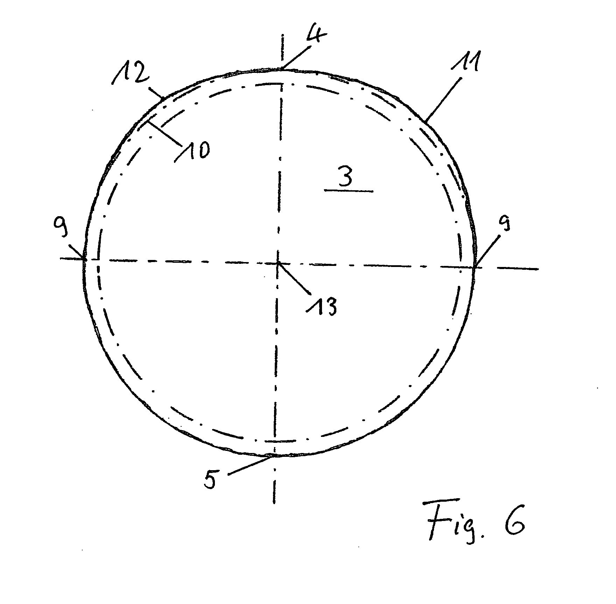

In einer weiteren in Fig. 6 dargestellten Ausgestaltung des inneren Bereichs 16 der Bolzenbohrung 3 entlang der Linie III-III in Fig. 1 weist der Nadir 5 eine kreisrunde Form auf, und ist der Zenit 4 queroval ausgebildet, wie die Bereiche 11 und 12 beidseitig des Zenitbereichs 4 der Bolzenbohrung 3 zeigen, die, wie anhand der zweiten Hilfslinie 10 zu sehen ist, jeweils einen größeren Abstand von der Bohrungsachse 13 aufweisen, als ihn die Bolzenbohrung 3 im Bereich des Zenits 4 und im Bereich des Äquators 9 von der Bohrungsachse 13 hat.

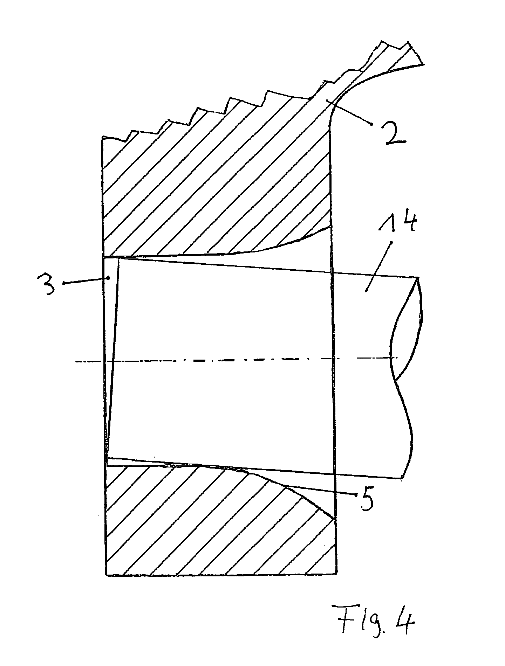

Wie es in Fig. 4 eingezeichnet ist, verformt sich der Kolbenbolzen 14 bei höheren Drehzahlen des Motors auf Grund der Massenträgheit des Kolbens 2 im oberen Totpunkt insoweit, dass er einen nach unten gerichteten Bogen bildet, wobei das linke Ende des insoweit verformten Kolbenbolzens 14 in Fig. 4 eingezeichnet ist.

Bei konventioneller Ausgestaltung der Bolzenbohrung, bei der die Aufweitungen im Zenit- und im Nadirbereich symmetrisch zueinander liegen, entwickelt der radial innere Nadirbereich 5 unter Massenkraftbelastung die größte mechanische Spannung. Die in den Fig. 1 und 4 dargestellte, größere Aufweitung des inneren Nadirbereichs 5 führt dazu, dass Spannungen vom inneren Bereich 16 des Nadirs 5 in Richtung des weiter außen liegenden Nadirbereichs 5 verlagert werden. Das hat den Vorteil einer deutlichen Reduzierung mechanischer Spannungen im inneren Nadirbereich 5 der Bolzenbohrung 3, wodurch sich eine Verlängerung der Lebensdauer und eine Verringerung des Nabenquerschnitts vor allem mit dem Vorteil einer geringeren Kolbenmasse ergeben.

Unter Gasdruckbelastung ergibt sich (wie in Fig. 5 dargestellt) eine Querovalisierung des im unbelasteten Zustand einen kreisrunden Querschnitt aufweisenden Kolbenbolzens 14, wobei die große Achse der Querovalisierung des Kolbenbolzens 14 senkrecht zur Kolbenachse 7 liegt. Dadurch werden die Bereiche 11' und 12' beidseitig des Zenitbereichs 4 einer kreisrunden Bolzenbohrung 3 (angedeutet durch die Hilfslinie 8 in Fig. 5) relativ hoch belastet.

Hierdurch ergibt sich ein Spalt 21 zwischen dem querovalen Kolbenbolzen 14 und dem Zenit 4 der Bolzenbohrung 3. Durch den auf den Kolben 2 wirkenden Gasdruck während des Arbeitstaktes wirkt eine diesen Spalt 21 verringernde Kraft auf die Bolzennabe 1, die im Bereich des Zenits 4 der Bolzenbohrung 3 tangential zur Bohrungsinnenfläche liegende Zugspannungen, das heißt, Tangentialspannungen in Richtung der Pfeile 19 und 20 in der Bolzennabe 1 verursacht. Durch diese Tangentialspannungen ergibt sich eine Verringerung der Lebensdauer der Bolzennabe 1.

Werden nun die Bereiche 11 und 12 beidseitig des Zenits 4 des inneren Bereiches 16 der Bolzenbohrung 3, wie in Fig. 3 dargestellt, mit einem größeren Spiel versehen, werden die Bereiche 11 und 12 vom ebenfalls queroval geformten (in Fig. 3 nicht eingezeichneten) Kolbenbolzen 14 weniger belastet und dabei der Spalt im Zenit 4 reduziert, sodass sich dadurch eine erhebliche Verlängerung der Lebensdauer der Bolzennabe 1 und des damit ausgerüsteten Kolbens ergibt.

Aus den gleichen Gründen werden in dem queroval ausgebildeten und in Fig. 2 dargestellten, äußeren Bereich 17 der Bolzenbohrung 3 vom unter Last queroval verformten Kolbenbolzen 14 die im Zenit 4 verursachten Tangentialspannungen verringert, was einen weiteren Beitrag zur Verlängerung der Lebensdauer der Bolzennabe 1 und des damit aufgerüsteten Kolbens ergibt.

Vor allem Kolben mit extrem kleiner Kompressionshöhe, das heißt, mit extrem kleinem Abstand zwischen Kolbenboden und Bohrungsachse 13, wodurch beispielsweise Rennmotore gekennzeichnet sind, erfahren unter dem Druck der Verbrennungsgase im Arbeitstakt eine Verbiegung um die Bohrungsachse 13. Dem kann dadurch entgegengewirkt werden, dass, wie es in Fig. 5 dargestellt ist, der Zenit 4 des radial inneren Bereiches der Bolzenbohrung 3 in Richtung der Kolbenachse 7 längsoval ausgebildet ist. Bei der angegebenen Verbiegung des Kolbens legen sich dann die Bereiche 11' und 12' der Bolzenbohrung 3 der Bolzennabe 1 an den Kolbenbolzen 14 an, wodurch diese Verbiegung des Kolbens um die Bohrungsachse 13 verringert wird. Bei Rennmotore hat dieser Vorteil gegenüber dem Vorteil der verlängerten Lebensdauer eine größere Bedeutung.

### Bezugszeichenliste

- 1: Bolzennabe
- 2: Kolben
- 3: Bolzenbohrung
- 4: Zenit der Bolzenbohrung 3
- 5: Nadir der Bolzenbohrung 3
- 6: große Achse der Ovalität
- 7: Kolbenachse
- 8: erste, kreisrunde Hilfslinie
- 9: Äquator der Bolzenbohrung 3
- 10: zweite, kreisrunde Hilfslinie
- 11, 11', 12, 12': Bereiche der Bolzennabe 3
- 13: Bohrungsachse
- 14: Kolbenbolzen
- 15: Pfeil
- 16: innerer Bereich der Bolzenbohrung 3
- 17: äußerer Bereich der Bolzenbohrung 3
- 18: unteres Ende des Kolbens
- 19, 20: Pfeil
- 21: Spalt

## Patentansprüche

1. Bolzennaben (1) eines Kolbens (2) für einen Verbrennungsmotor mit jeweils einer Bolzenbohrung (3) mit Bohrungsachse (13) zum Lagern eines Kolbenbolzens (14), wobei in dem in Richtung der Bohrungsachse (13) gesehen inneren Bereich (16) der Bolzenbohrungen (3) der Zenit (4) der Bolzenbohrung (3) einen geringeren Abstand von der Bohrungsachse (13) als der Nadir (5) der Bolzenbohrungen (3) aufweist, und wobei die inneren Bereiche (16) der Bolzenbohrungen (3) stetig in die äußeren Bereiche (17) der Bolzenbohrungen (3) übergehen, **dadurch gekennzeichnet,**
- **dass** die inneren Bereiche (16) der Bolzenbohrungen (3) beidseitig des Zenits (4) Bereiche (11, 12) aufweisen, die von der Bohrungsachse (13) einen größeren Abstand haben als der Zenit (4) der Bolzenbohrung (3),
- **dass** die in Richtung der Bohrungsachse (13) gesehen äußeren Bereiche (17) der Bolzenbohrungen (3) in Bezug zur Kolbenachse (7) queroval ausgebildet sind.

2. Bolzennaben (1) eines Kolbens (2) für einen Verbrennungsmotor nach Anspruch 1,
**dadurch gekennzeichnet, dass** der Nadir (5) der in Richtung der Bohrungsachse (13) gesehen inneren Bereiche (16) der Bolzenbohrungen (3) in Richtung der Kolbenachse (7) längsoval ausgebildet ist.

3. Bolzennaben (1) eines Kolbens (2) für einen Verbrennungsmotor nach Anspruch 1,
**dadurch gekennzeichnet, dass** der Nadir (5) der in Richtung der Bohrungsachse (13) gesehen inneren Bereiche (16) der Bolzenbohrungen (3) kreisrund ausgebildet ist.

## Claims

1. Pin bosses (1) of a piston (2) for an internal combustion engine, each comprising a pin bore (3) having a bore axis (13) for mounting a piston pin (14), the zenith (4) of the pin bore (3) being at a smaller distance from the bore axis (13) than the nadir (5) of the pin bores (3) in the inner region (16), viewed in the direction of the bore axis (13), of the pin bores (3), and the inner regions (16) of the pin bores (3) continuously transitioning into the outer regions (17) of the pin bores (3), **characterised in that**
- the inner regions (16) of the pin bores (3) comprise regions (11, 12) on either side of the zenith (4) which are at a greater distance from the bore axis (13) than the zenith (4) of the pin bore (3),
- the outer regions (17), viewed in the direction of the bore axis (13), of the pin bores (3) are formed so as to be transversely oval relative to the piston axis (7).

2. Pin bosses (1) of a piston (2) for an internal combustion engine according to claim 1, **characterised in that** the nadir (5) of the inner regions (16), viewed in the direction of the bore axis (13), of the pin bores (3) is formed so as to be longitudinally oval in the direction of the piston axis (7).

3. Pin bosses (1) of a piston (2) for an internal combustion engine according to claim 1, **characterised in that** the nadir (5) of the inner regions (16), viewed in the direction of the bore axis (13), of the pin bores (3) is configured to be circular.

## Revendications

1. Bossage d'axe (1) d'un piston (2) d'un moteur à combustion interne avec respectivement un alésage d'axe (3) avec axe d'alésage (13) pour supporter un axe de piston (14), dans lequel, dans la zone intérieure (16) des alésages d'axe (3) vue dans la direction de l'axe d'alésage (13), le zénith (4) de l'alésage d'axe (3) présente une moindre distance à l'axe d'alésage (13) que le nadir (5) des alésages d'axe (3), et dans lequel les zones intérieures (16) des alésages d'axe (3) se transforment constamment en zones extérieures (17) des alésages d'axe (3), **caractérisé en ce que**
- les zones intérieures (16) des alésages d'axe (3) présentent des deux côtés du zénith (4) des zones (11, 12) qui présentent une plus grande distance à l'axe d'alésage (13) que le zénith (4) de l'alésage d'axe (3),
- les zones extérieures (17) des alésages d'axe (3) vues dans la direction de l'axe d'alésage (13) sont constituées à la façon d'un ovale transversal par rapport à l'axe de piston (7).

2. Bossage d'axe (1) d'un piston (2) d'un moteur à combustion interne selon la revendication 1, **caractérisé en ce que** le nadir (5) des zones intérieures (16) des alésages d'axe (3) vues dans la direction de l'axe d'alésage (13) est constitué à la façon d'un ovale longitudinal dans la direction de l'axe de piston (7).

3. Bossage d'axe (1) d'un piston (2) d'un moteur à combustion interne selon la revendication 1, **caractérisé en ce que** le nadir (5) des zones intérieures (16) des alésages d'axe (3) vues dans la direction de l'axe d'alésage (13) est constitué de façon circulaire.
